# EUROPÄISCHE PATENTSCHRIFT

(11) **EP 3 081 788 B1**
(45) Veröffentlichungstag und Bekanntmachung des Hinweises auf die Patenterteilung: **13.06.2018**
(21) Anmeldenummer: 16164217.8
(22) Anmeldetag: 07.04.2016
(51) Int. Cl.: F01N 13/08, F02D 9/04, F01N 1/16, F01N 1/00, F16K 5/06, F16K 27/06

(54) **AUSPUFFANLAGE MIT EINEM STEUERVENTIL**
EXHAUST OUTLET WITH A CONTROL VALVE
INSTALLATION D'ECHAPPEMENT COMPRENANT UNE SOUPAPE DE COMMANDE

(30) Priorität: 14.04.2015 DE 202015101816 U
(43) Veröffentlichungstag der Anmeldung: 19.10.2016
(73) Patentinhaber: Penzkofer, Klaus, 94368 Pilling (DE)
(72) Erfinder: Penzkofer, Klaus, 94368 Pilling (DE)
(74) Vertreter: Popp, Eugen

(56) Entgegenhaltungen:
- DE-A1- 10 235 997
- DE-A1-102008 052 089
- DE-U1-202010 012 100
- JP-B1- 3 701 297
- US-A- 4 651 775
- US-A- 5 866 860
- US-A1- 2001 027 648
- US-A1- 2011 132 337
- US-A1- 2014 190 161

## Beschreibung

Die Erfindung betrifft eine Auspuffanlage mit einem Steuerventil gemäß dem Oberbegriff des Anspruchs 1. Ein Steuerventil der eingangs genannten Art ist beispielsweise aus DE 20 2010 012 100 U1 bekannt.

Bei dem bekannten Steuerventil ist innerhalb eines Ventilgehäuses ein Klappenteller angeordnet, der einen Absperrkörper bildet. Der Klappenteller ist drehbar gelagert, so dass eine Querschnittsänderung des sich durch das Steuerventil erstreckenden Strömungskanals einstellbar ist. Dabei ist der Klappenteller so im Ventilgehäuse angeordnet, dass eine thermisch bedingte Ausdehnung des Klappentellers in radialer Richtung die Drehbewegung des Klappentellers nicht blockiert. Es besteht also ein thermisches Ausdehnungsspiel zwischen dem Ventilgehäuse und dem Klappenteller.

Nachteilig bei dem bekannten Steuerventil ist, dass sich der Klappenteller auch im geöffneten Zustand im Strömungskanal befindet. Dies führt zu Verwirbelungen im Abgasstrom, die unerwünscht sein können. Außerdem können sich Rußpartikel am Klappenteller anlagern, die trotz des ursprünglich vorgesehenen thermischen Ausdehnungsspiels eine Drehung oder eine dichtende Anlage des Klappentellers am Dichtungssitz beeinträchtigen können.

US 5,866,860 A offenbart eine Auspuffanlage mit einem Steuerventil, das als durchbohrte Kugel ausgebildet ist und zeigt somit eine Auspuffanlage gemäß dem Oberbegriff des Anspruchs 1. Das Steuerventil dient zur Regelung einer Abgasströmung. Nachteilig ist allerdings, dass die Ventilverstellung mittels Handhebeln aufwändig ist. Wegen des notwenigen manuellen Eingriffs ist eine zuverlässige Abgasregelung nicht sichergestellt.

Die Aufgabe der Erfindung besteht darin, eine Auspuffanlage mit einem Steuerventil anzugeben, das wartungsarm ist und eine zuverlässige Funktion gewährleistet.

Erfindungsgemäß wird diese Aufgabe durch den Gegenstand des Anspruchs 1 gelöst.

So schlägt die Erfindung vor, eine Auspuffanlage für ein Motorfahrzeug, insbesondere ein Motorrad, mit einem ersten Auspuffrohr, das einen ersten Strömungskanal bereitstellt, und mit einem Steuerventil anzugeben, wobei das Steuerventil ein Ventilgehäuse aufweist, in dem ein Absperrkörper zur Querschnittsänderung eines Strömungskanals der Auspuffanlage beweglich angeordnet ist. Zwischen dem Absperrkörper und dem Ventilgehäuse ist ein Ausdehnungsspiel in radialer und axialer Richtung vorgesehen, welches eine thermische Ausdehnung des Absperrkörpers innerhalb des Ventilgehäuses erlaubt. Dabei ist vorgesehen, dass der Absperrkörper eine durchbohrte Kugel aufweist und im ersten Strömungskanal angeordnet ist. Das Ventilgehäuse weist wenigstens einen Bypasskanal auf.

Mithin ist das Steuerventil im Wesentlichen nach Art eines Kugelhahns ausgebildet, wobei als Absperrkörper eine mit wenigstens einer Durchgangsbohrung versehene Kugel vorgesehen ist. Die durchbohrte Kugel bildet im Wesentlichen einen um eine Drehachse drehbaren Ring, wobei sich die Drehachse vorzugsweise radial durch den Ring bzw. die durchbohrte Kugel erstreckt. Der Ring umfasst eine sphärische Außenumfangsfläche. Die Innenumfangsfläche der durchbohrten Kugel bzw. der wenigstens einen Durchgangsbohrung kann eine zylinderförmige Gestalt aufweisen.

Mit der Verwendung einer durchbohrten Kugel als Absperrkörper wird erreicht, dass der Querschnitt des Strömungskanals vollständig freigegeben werden kann. Insbesondere wird mit dem Steuerventil vermieden, dass im vollständig geöffneten Zustand des Steuerventils bzw. des Absperrkörpers Bauteile in den Strömungskanal hineinragen. Unerwünschte Verwirbelungen im Strömungskanal werden so vermieden. Bei dem als Kugel mit wenigstens einer Durchgangsbohrung ausgebildeten Absperrkörper ist außerdem das Risiko reduziert, dass sich Rußpartikel festsetzen, die eine Drehbewegung des Absperrkörpers behindern oder erschweren. Damit ist eine zuverlässige Funktion sichergestellt. Außerdem zeichnet sich das Steuerventil durch eine gute Wartungsfreundlichkeit aus. Insbesondere wird durch den freien Durchgang durch das vollständig geöffnete Steuerventil ein Zugang zu angrenzenden Rohrabschnitten erleichtert.

Bei einer bevorzugten Ausgestaltung der erfindungsgemäßen Auspuffanlage weist der Absperrkörper, insbesondere die durchbohrte Kugel, ein oder mehrere Durchgangsbohrungen auf. Im Allgemeinen ist es vorteilhaft, wenn der Absperrkörper eine einzige Durchgangsbohrung umfasst, deren Querschnitt vorzugsweise dem Innenquerschnitt angrenzender Auspuffrohrabschnitte entspricht. Es ist grundsätzlich jedoch auch möglich, die Kugel mit mehreren Durchgangsbohrungen zu versehen. Anhand einer größeren Anzahl der Durchgangsbohrungen kann vorteilhaft das Verhältnis zwischen Durchströmquerschnitt und Ventilstellung eingestellt werden.

Das Ventilgehäuse ist vorzugsweise mehrteilig ausgebildet. Dies erleichtert die Fertigung des Steuerventils. Insbesondere kann das Ventilgehäuse zweiteilig ausgebildet sein, so dass bei der Montage der Absperrkörper leicht zwischen die beiden Ventilgehäuseteile einsetzbar ist.

Das Ventilgehäuse und/oder der Absperrkörper können ein Vollmaterial aufweisen bzw. daraus gebildet sein. Die Verwendung eines Vollmaterials erleichtert die Produktion und führt zu einer hohen Stabilität des Steuerventils. Alternativ kann vorgesehen sein, dass das Ventilgehäuse und/oder der Absperrkörper ein Hohlmaterial aufweist oder daraus gebildet sind. Mit der Verwendung eines Hohlmaterials wird der Vorteil verfolgt, eine möglichst leichte Konstruktion zu schaffen. Außerdem kann das Hohlmaterial einen Resonanzkörper bilden, so dass eine gewünschte Geräuschentwicklung gefördert wird.

Das Ventilgehäuse weist vorzugsweise einen mittleren, zylinderförmigen Abschnitt und zwei sich daran anschließende, kegelstumpfförmige Abschnitte auf. Diese Gestaltung des Ventilgehäuses erleichtert die Montage des Steuerventils innerhalb eines Auspuffrohrs bzw. der Auspuffanlage. Im Allgemeinen ist das Steuerventil vorzugsweise so ausgebildet, dass es in einem Auspuffrohr oder zwischen zwei Auspuffrohren der Auspuffanlage montierbar ist. Dabei kann die Rohrform der Auspuffrohre im Wesentlichen zylinderförmig, alternativ mehreckig bzw. allgemein polygonal sein.

Vorzugsweise ist der Absperrkörper mit einer Betätigungswelle verbunden oder damit einteilig ausgebildet. Die Betätigungswelle kann sich in bevorzugten Ausführungsformen durch eine Öffnung im Ventilgehäuse nach außen erstrecken. Die Betätigungswelle dient vorteilhaft dazu, den Absperrkörper innerhalb des Ventilgehäuses zu drehen. Dazu kann die Betätigungswelle mit einer mechanischen Antriebseinrichtung, beispielsweise einem Hebel oder einem Seilzug gekoppelt sein. Es ist auch möglich, dass die Betätigungswelle mit einer elektronisch gesteuerten Regeleinrichtung gekoppelt ist. Insbesondere kann die Betätigungswelle mit einem elektrischen Stellmotor verbunden sein, so dass die Stellung des Absperrkörpers durch Betätigung des Stellmotors einstellbar ist.

Zur weiteren Vereinfachung der Herstellung des Steuerventils kann vorgesehen sein, dass die Öffnung für die Betätigungswelle im zylinderförmigen Abschnitt des Ventilgehäuses angeordnet ist. In diesen Abschnitt ist die Öffnung besonders einfach integrierbar. Insbesondere kann vorgesehen sein, dass das Ventilgehäuse im zylinderförmigen Abschnitt zweigeteilt ist, wobei die Trennlinie zwischen den beiden Zylinderhälften des Ventilgehäuses in Umfangsrichtung ausgerichtet ist und ebenfalls die Öffnung trennt. Mit anderen Worten weisen beide Zylinderhälften jeweils eine halbkreisförmige Hälfte der Öffnung auf, wobei durch Zusammenfügen der Zylinderhälften des Ventilgehäuses die Öffnung kreisrund zusammengesetzt wird. So kann der Absperrkörper einfach in das Ventilgehäuse integriert und gleichzeitig die Betätigungswelle durch das Ventilgehäuse nach außen geführt werden.

Im Allgemeinen ist es vorgesehen, dass die Betätigungswelle und der Absperrkörper dasselbe Material aufweisen. Insbesondere können die Betätigungswelle und der Absperrkörper einteilig ausgebildet sein. Alternativ kann vorgesehen sein, dass die Betätigungswelle und der Absperrkörper unterschiedliche Materialien umfassen. So kann die Betätigungswelle aus Edelstahl gebildet sein, wogegen der Absperrkörper beispielsweise ein keramisches Material umfasst. Dabei kann die Betätigungswelle fest in das keramische Material des Absperrkörpers eingegossen sein, so dass die Betätigungswelle mit dem Absperrkörper insgesamt ein einheitliches Bauteil bildet.

Bei der erfindungsgemäßen Auspuffanlage ist vorgesehen, dass das Ventilgehäuse wenigstens einen Bypasskanal aufweist. Der Bypasskanal ermöglicht eine Abgasströmung unabhängig von der Stellung des Absperrkörpers. Der Bypasskanal ist vorteilhafterweise parallel zur Durchgangsbohrung im Absperrkörper angeordnet. Der Bypasskanal kann zu demselben Auspuffrohr ausgerichtet sein, das sich an den Absperrkörper anschließt. Alternativ ist es möglich, dass der Bypasskanal einem weiteren Strömungskanal zugeordnet ist, der von dem Strömungskanal in dem der Absperrkörper angeordnet ist, unabhängig ist.

Zwischen dem Ventilgehäuse und dem Absperrkörper kann wenigstens eine Dichtung, insbesondere eine metallische Dichtung, angeordnet sein. Durch die Dichtung wird erreicht, dass im geschlossenen Zustand des Absperrkörpers ein vollständiger Verschluss des Strömungskanals erreicht wird. Die Verwendung einer metallischen Dichtung bietet sich aufgrund der hohen thermischen Belastung in einer Auspuffanlage an.

Eine weitere Ausgestaltung der Erfindung sieht vor, dass der Absperrkörper schwimmend, insbesondere allseitig beabstandet zum Ventilgehäuse, im Ventilgehäuse angeordnet ist. Vorzugsweise beträgt der Abstand zwischen dem Absperrkörper und dem Ventilgehäuse zwischen 0,2 mm und 1,3 mm, vorzugsweise zwischen 0,5 mm und 1,0 mm. Dabei ist nicht ausgeschlossen, dass in diesem Spalt, der zwischen dem Ventilgehäuse und dem Absperrkörper vorgesehen ist, eine Dichtung angeordnet ist. Der Spalt stellt sicher, dass der Absperrkörper auch bei thermisch bedingter radialer Ausdehnung leicht drehbar ist. Insofern wird durch den Abstand zwischen dem Absperrkörper und dem Ventilgehäuse ein Ausdehnungsspiel bereitgestellt. Ein Verklemmen des Absperrkörpers wird so vermieden.

In diesem Zusammenhang wird darauf hingewiesen, dass für die Verwendung des Steuerventils in einer Auspuffanlage eine absolute Dichtigkeit im geschlossenen Zustand des Absperrkörpers nicht zwingend erforderlich ist. Insofern kann selbst auf eine Dichtung zwischen dem Absperrkörper und dem Ventilgehäuse verzichtet werden. Die wesentliche Aufgabe des Steuerventils besteht darin, den Volumenstrom des Auspuffgases zu variieren, nicht jedoch zwingend vollständig zu unterbinden.

Das Ventilgehäuse weist in bevorzugten Ausgestaltungen der Erfindung wenigstens ein Lager für den Absperrkörper und/oder die Betätigungswelle auf. Insbesondere können Buchsenlager oder Bundbuchsenlager vorgesehen sein, die eine Drehung des Absperrkörpers im Ventilgehäuse erleichtern.

Um die Drehbewegung des Absperrkörpers zu begrenzen, kann außerdem ein Anschlag vorgesehen sein. Der Anschlag kann am Ventilgehäuse und/oder am Absperrkörper angeordnet sein. Vorzugsweise ist der Anschlag so gestaltet, dass er lediglich die Drehbewegung des Absperrkörpers begrenzt, nicht jedoch weitere Funktionen erfüllt. Insbesondere ist vorgesehen, dass der Anschlag frei von einer Dichtungsfunktion ist, d.h. keinen Dichtungssitz bildet.

Bei dem Steuerventil der erfindungsgemäßen Auspuffanlage kann außerdem wenigstens ein Federelement vorgesehen sein, dass auf eine Drehbewegung des Absperrkörpers einwirkt, so dass er Absperrkörper in eine vorbestimmte Ausgangsstellung zurückführbar ist. Mit anderen Worten kann der Absperrkörper federvorgespannt sein, so dass er aufgrund der Federkraft des Federelements in eine Ausgangsstellung, vorzugsweise die vollständig geschlossene Stellung, zurückgestellt wird. Die Öffnung des Absperrkörpers erfolgt vorzugsweise gegen die Federkraft des Federelements. Das nach dem Prinzip eines Kugelhahns ausgebildete Steuerventil kann auch für Strömungswege in Brennstoffleitungen, Betriebsstoffleitungen, Ansaugluftleitungen, Belüftungsleitungen oder Kühlmittelleitungen eines Motorfahrzeugs, vorzugsweise eines Motorrads, eingesetzt werden. Insbesondere kommt das Steuerventil in motorisierten Fahrzeugen zum Einsatz, die einen Verbrennungsmotor aufweisen. Alternativ ist es denkbar, das Steuerventil in Fahrzeugen mit Elektromotor, Hybridantrieb oder Wasserstoffmotor, einzusetzen.

Die erfindungsgemäße Auspuffanlage kann einen Zuströmkanal und ein oder mehrere Abströmkanäle aufweisen. Insofern kann vorgesehen sein, dass das Steuerventil einen Zuströmkanal der Auspuffanalage mit wenigstens zwei Abströmkanälen der Auspuffanlage verbindet, so dass eine Aufteilung des Volumenstroms aus dem Zuführkanal in die Abströmkanäle einstellbar ist. Das Steuerventil kann also nicht nur zur Begrenzung des Volumenstroms in einem durchgehenden Auspuffrohr genutzt werden, sondern auch die Funktion übernehmen, den Volumenstrom aus einem einzigen Zuströmkanal in mehrere Abströmkanäle aufzuteilen. Dabei kann durch die Stellung des Absperrkörpers der Grad der Volumenstromverteilung eingestellt werden.

Vorzugsweise ist wenigstens ein zweites Auspuffrohr vorgesehen, das das erste Auspuffrohr umgreift. Insbesondere kann das erste Auspuffrohr koaxial innerhalb des zweiten Auspuffrohrs angeordnet sein. Das zweite Auspuffrohr umgreift das erste Auspuffrohr vorzugsweise so, dass zwischen dem ersten Auspuffrohr und dem zweiten Auspuffrohr ein Ringraum gebildet ist. Das Steuerventil kann so angeordnet sein, dass wenigstens ein Bypasskanal des Ventilgehäuses im Ringraum positioniert ist. Der Bypasskanal kann auf diese Weise eine Fluidverbindung zwischen Rohrabschnitten des zweiten Auspuffrohrs bereitstellen. Der Absperrkörper reguliert dabei den Volumenstrom durch das erste Auspuffrohr. Durch die Bypasskanäle, die dem zweiten Auspuffrohr zugeordnet sind, kann mit dem Steuerventil außerdem eine schalldämpfende Wirkung erzeugt werden.

Das erste Auspuffrohr weist in einer bevorzugten Ausgestaltung der erfindungsgemäßen Auspuffanlage jeweils in Strömungsrichtung des Abgases vor und hinter dem Steuerventil eine Verbindungsöffnung auf, die den ersten Strömungskanal, d.h. den Strömungskanal des ersten Auspuffrohrs, mit dem Ringraum verbindet. Auf diese Weise ist ein Alternativströmungsweg für das Abgas geschaffen. Das durch das erste Auspuffrohr strömende Abgas kann also über die Verbindungsöffnung in den Ringraum zwischen dem ersten Auspuffrohr und dem zweiten Auspuffrohr geleitet und so durch die Bypasskanäle des Ventilgehäuses geführt werden. Nach Durchgang durch den Bypasskanal im Ventilgehäuse gelangt das Abgas über eine weitere Verbindungsöffnung wieder zurück in das erste Auspuffrohr.

Das Steuerventil ist in einer besonders bevorzugten Ausgestaltung elektronisch steuerbar. Insbesondere kann das Steuerventil mit einer Steuerung verbunden sein, die eine Stellung des Absperrkörpers in Abhängigkeit von Betriebszustandsdaten des Motorfahrzeugs vorgibt. So kann die Stellung des Absperrkörpers insbesondere abhängig von der Drehzahl des Verbrennungsmotors eingestellt werden. Um die Betriebszustandsdaten des Motorfahrzeugs einfach abgreifen zu können, ist in einer weiteren bevorzugten Ausgestaltung der Erfindung vorgesehen, dass die Steuerung eine standardisierte Schnittstelle, insbesondere eine OBD-Schnittstelle, zur Verbindung mit dem Motorfahrzeug aufweist. Damit ist eine besonders einfache Erfassung der Betriebszustandsdaten des Motorfahrzeugs ermöglicht.

Die standardisierte Schnittstelle stellt vorzugsweise eine ausreichende elektrische Energie zum Betrieb der Auspuffsteuerung bereit. Konkret kann das Steuerventil durch einen Stellmotor betätigbar sein, dessen Stromversorgung über die standardisierte Schnittstelle, insbesondere die OBD-Schnittstelle, erfolgt. Der Stellmotor kann dazu mittelbar über die Steuerung mit der Schnittstelle verbunden sein.

Die Erfindung wird im Folgenden anhand eines Ausführungsbeispiels unter Bezugnahme auf die beigefügten, schematischen Zeichnungen näher erläutert. Darin zeigen:
- Fig. 1:: eine perspektivische Gesamtansicht eines Steuerventils einer erfindungsgemäßen Auspuffanlage gemäß einem bevorzugten Ausführungsbeispiel;
- Fig. 2:: einen Teil des Ventilgehäuses des Steuerventils gemäß Fig. 1;
- Fig. 3:: eine Detailansicht des Absperrkörpers des Steuerventils gemäß Fig. 1;
- Fig. 4:: eine perspektivische Ansicht eines Teils einer Auspuffanlage mit dem Steuerventil gemäß Fig. 1;
- Fig. 5:: eine Querschnittsansicht durch einen Teil einer Auspuffanlage mit dem Steuerventil gemäß Fig. 1; und
- Fig. 6:: eine Querschnittsansicht eines Details des Steuerventils gemäß Fig. 1; und
- Fig. 7: eine perspektivische Ansicht einer erfindungsgemäßen Auspuffanlage mit dem Steuerventil gemäß Fig. 1.

In den beigefügten Zeichnungen ist ein Steuerventil 10 für eine Auspuffanlage eines Motorfahrzeugs gezeigt. Das Steuerventil 10 kommt vorzugsweise in einer Auspuffanlage eines Motorrads zum Einsatz und ermöglicht die Änderung des Volumenstroms des durch das Auspuffrohr 20 geleiteten Abgases. Durch eine entsprechende Steuerung des Steuerventils 10 kann so sowohl die Leistung des Motorrads, als auch die Geräuschentwicklung beeinflusst werden.

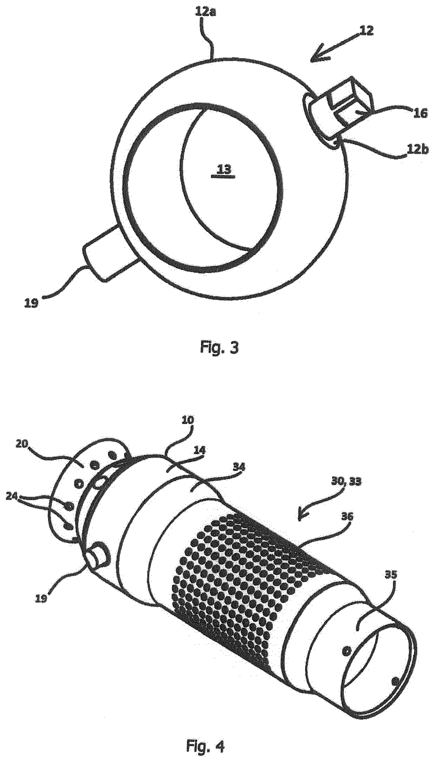

Das Steuerventil 10 fasst im Allgemeinen ein Ventilgehäuse 11, in dem ein Absperrkörper 12 angeordnet ist. Der Absperrkörper 12 ist bei dem dargestellten Ausführungsbeispiel als durchbohrte Kugel 12a ausgebildet. Der als durchbohrte Kugel 12a geformte Absperrkörper 12 ist gut in Fig. 3 erkennbar.

Der Absperrkörper 12 umfasst insbesondere eine Durchgangsbohrung 13, die im Wesentlichen eine zylinderförmige Innenoberfläche des Absperrkörpers 12 bildet. Vorzugsweise ist die Durchgangsbohrung 13 so dimensioniert, dass ihr Durchmesser dem Durchmesser eines angrenzenden Auspuffrohres 20 entspricht. Die Außenoberfläche des Absperrkörpers 12 ist sphärisch gestaltet bzw. folgt einer Kugelform. Wie in Fig. 3 ferner erkennbar ist, weist der Absperrkörper 12 eine Betätigungswelle 16 auf, wobei die Betätigungswelle 16 einstückig mit dem Absperrkörper 12 bzw. der durchbohrten Kugel 12a ausgebildet ist. Die Betätigungswelle 16 umfasst in dem hier dargestellten Ausführungsbeispiel einen freien Endabschnitt, der eine mehreckige, insbesondere quadratische, Querschnittsform aufweist. Mit anderen Worten weist der Endabschnitt der Betätigungswelle 16 eine Vierkantform auf, sodass eine entsprechende Betätigungseinrichtung formschlüssig mit der Betätigungswelle 16 verbindbar ist. Wie in Fig. 3 ferner erkennbar ist, liegt auf der Außenoberfläche des Absperrkörpers 12 eine Dichtung 12b auf, die die Betätigungswelle 16 umgreift. Die Dichtung 12b kann im Wesentlichen durch eine gewölbte Unterlegscheibe gebildet sein.

Radial der Betätigungswelle 16 gegenüberliegend ist ein Lagerstift 19 angeordnet, wobei der Lagerstift 19 eine zylinderförmige Außenkontur aufweist. Der Lagerstift 19 greift vorzugsweise in eine ebenfalls zylinderförmige Vertiefung oder Öffnung 17 im Ventilgehäuse ein und fixiert somit die längsaxiale Position des Absperrkörpers 12 im Ventilgehäuse 11. Die Betätigungswelle 16 erstreckt sich vorzugsweise ebenfalls durch eine Öffnung 17 im Ventilgehäuse 11, wobei zumindest der freie Endabschnitt, der als Vierkant ausgebildet ist, aus dem Ventilgehäuse 11 hervorragt und so mit einer Betätigungseinrichtung verbindbar ist.

Im Allgemeinen kann anstelle der hier dargestellten zweiachsigen Variante des Absperrkörpers 12 mit einer Betätigungswelle 16 (erste Achse) und einem Lagerstift 19 (zweite Achse) eine einzige Achse vorgesehen sein. Insbesondere kann der Absperrkörper 12 ausschließlich die Betätigungswelle 16 als einzige Achse aufweisen. Mit anderen Worten kann der Absperrkörper 12 ohne den Lagerstift 19 ausgeführt sein.

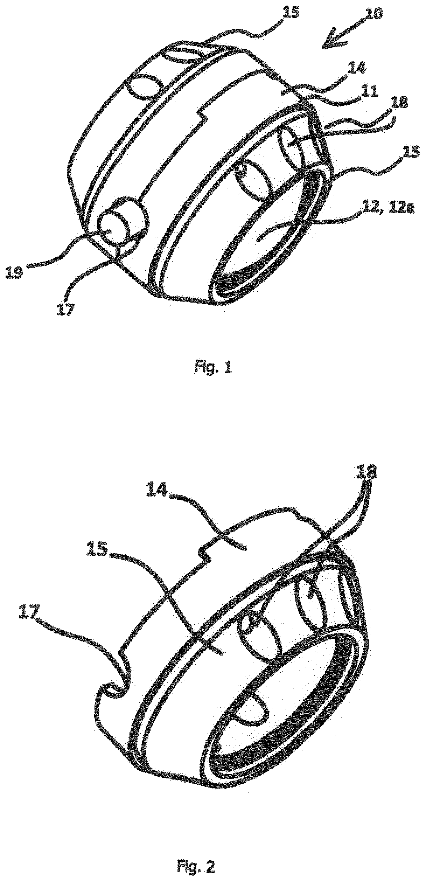

In Fig. 1 ist das Ventilgehäuse 11 gezeigt. Das Ventilgehäuse 11 umfasst einen zylinderförmigen Abschnitt 14 und zwei kegelstumpfförmige Abschnitte 15. Der zylinderförmige Abschnitt 14 ist zwischen den beiden kegelstumpfförmigen Abschnitten 15 angeordnet und mit diesen fest verbunden. Im zylinderförmigen Abschnitt 14 ist die Öffnung 17 vorgesehen, durch die sich der Lagerstift 19 erstreckt.

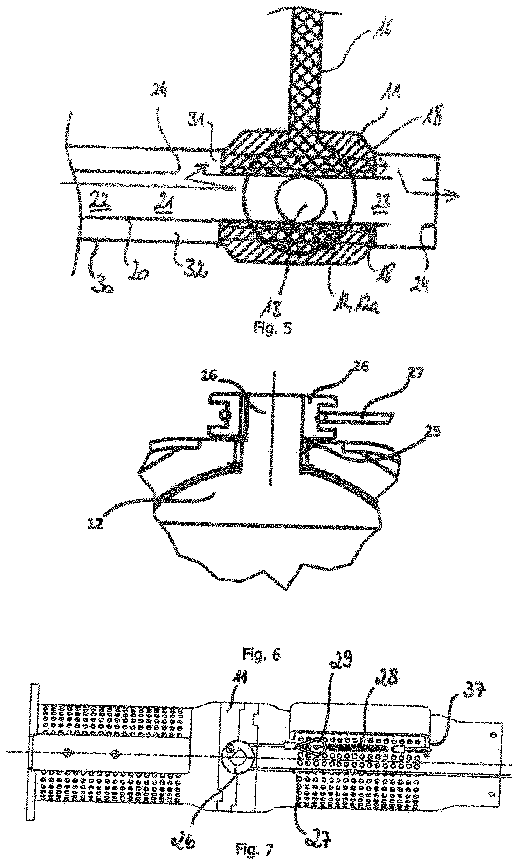

Auf Höhe des zylinderförmigen Abschnitts 14 ist der Absperrkörper 12 in dem Ventilgehäuse 11 angeordnet. In längsaxialer Richtung ragt der Absperrkörper 12 jedoch teilweise in die kegelstumpfförmigen Abschnitte 15 vor. Im Allgemeinen ist vorgesehen, dass das Ventilgehäuse 11 eine im Wesentlichen kugelförmige Innenoberfläche aufweist, sodass sich der Absperrkörper 12 gut in dem Ventilgehäuse 11 drehen lässt. Um ein Verkanten des Absperrkörpers 12 zu verhindern, ist außerdem vorgesehen, dass zwischen dem Ventilgehäuse 11 und dem Absperrkörper 12 ein Ausdehnungsspiel besteht. Dieses kann beispielsweise durch die Dichtung 12b eingestellt werden. Beispielsweise kann die Dichtung 12b eine Wandstärke zwischen 0,2 mm und 0,5 mm aufweisen, sodass bei Verwendung von zwei Dichtungen 12b einerseits an der Betätigungswelle 16 und andererseits am Lagerstift 19 ein Ausdehnungsspiel von 0,5 mm bis 1 mm eingehalten wird. Bevorzugt ist ein Ausdehnungsspiel von 0,5 mm, wobei der Absperrkörper 12 zum Ventilgehäuse 11 oder zu Lagerbuchsen 25, durch welche der Lagerstift 19 bzw. die Betätigungswelle 16 geführt sind, einen Abstand von 0,25 mm aufweist. In Fig. 6 ist bespielhaft eine Lagerbuchse 25 dargestellt, die als Bundbuchsenlager ausgebildet ist. Die Lagerbuchse 25 erstreckt sich durch das Ventilgehäuse 11 und nimmt die Betätigungswelle 16 auf. Die Betätigungswelle 16 ist mit einer Seilführung 26 verbunden. Die Seilführung 26 nimmt ein Seil, insbesondere ein Drahtseil 27, auf, das einerseits mit einer Feder 28 vorgespannt und andererseits mit einem Stellmotor für die Betätigung des Steuerventils verbunden ist. Die Feder 28 greift dazu in eine Schlaufe 29 ein, die einstückig aus einem Längsende des Drahtseils 27 geformt ist. Die Befestigung der Feder 28 erfolt über einen Haken 37, der an dem zweiten Auspuffrohr 30 angebracht bzw. fixiert ist (Fig. 7).

Wie in Fig. 1 ferner erkennbar ist, erstrecken sich Bypasskanäle 18 durch das Ventilgehäuse 11. Die Bypasskanäle 18 verlaufen parallel zur längsaxialen Richtung des Ventilgehäuses 11 bzw. parallel zur Strömungsrichtung eines das Steuerventil 10 durchströmenden Fluids. Insbesondere sind insgesamt sechs Bypasskanäle 18 vorgesehen, wobei jeweils drei Bypasskanäle 18 eine Gruppe bilden und die beiden Gruppen von je drei Bypasskanälen 18 radial gegenüberliegend angeordnet sind. Die Funktion der Bypasskanäle 18 wird nachfolgend im eingebauten Zustand anhand von Fig. 4 näher erläutert.

Fig. 2 zeigt einen Teil bzw. eine Hälfte des Ventilgehäuses 11. Vorzugsweise ist das Ventilgehäuse mehrteilig, insbesondere zweiteilig, ausgebildet. Dies erleichtert die Montage des kugelförmigen Absperrkörpers 12. Dazu ist das Ventilgehäuse 11 in Umfangsrichtung entlang des zylinderförmigen Abschnitts 14 geteilt. Insbesondere ist das Ventilgehäuse 11 so geteilt, dass die Öffnung 17 sowohl für die Betätigungswelle 16, als auch für den Lagerstift 19 mittig geteilt sind, sodass jede Hälfte des Ventilgehäuses 11 zwei radial gegenüberliegende, halbrunde Ausnehmungen aufweist, wobei die halbrunden Ausnehmungen im zusammengesetzten Zustand der beiden Hälften des Ventilgehäuses 11 jeweils die Öffnungen 17 bilden, die kreisrund ausgebildet sind. So lässt sich der Absperrkörper 12 mit der Betätigungswelle 16 und dem Lagerstift 19 einfach in eine Hälfte des Ventilgehäuses 11 einlegen und das Ventilgehäuse 11 dann durch Aufsetzen der zweiten Hälfte komplettieren.

Wie in Figuren 1 und 2 ebenfalls erkennbar ist, sind die kegelstumpfförmigen Abschnitte 15 nach außen hin verjüngend ausgebildet. Dies dient einerseits der Materialreduktion, da das Ventilgehäuse 11 insgesamt so der Kugelform des Absperrkörpers 12 folgt. Andererseits erlaubt es die kegelstumpfförmige Gestaltung der längsaxialen Enden des Ventilgehäuses 11, das Steuerventil 10 einfach und raumsparend in eine Auspuffanlage zu integrieren.

In Fig. 4 ist ein Teil einer Auspuffanlage gezeigt, die zwei Auspuffrohre 20, 30 aufweist. Insbesondere ist ein erstes Auspuffrohr 20 vorgesehen, das koaxial innerhalb eines zweiten Auspuffrohrs 30 angeordnet ist. Das zweite Auspuffrohr 30 bildet im Wesentlichen einen Schalldämpfer. Dazu umfasst das zweite Auspuffrohr 30 eine regelmäßige, sich über den gesamten Umfang des Auspuffrohrs 30 erstreckende Perforierung. Das erste Auspuffrohr 20 weist einen Zuströmkanal 22 auf, der in Strömungsrichtung des Abgases dem Steuerventil 10 vorgeordnet ist. Das Steuerventil 10 schließt sich unmittelbar an den Zuströmkanal 22 an. In Strömungsrichtung dem Steuerventil 10 nachgeordnet folgt ein Abströmkanal 23 des ersten Auspuffrohrs 20. Der Abströmkanal 23 ist koaxial innerhalb des zweiten Auspuffrohrs 30 angeordnet.

Das erste Auspuffrohr 20 bildet einen ersten Strömungskanal 21 für Abgase. Dabei weist das erste Auspuffrohr 20 in Strömungsrichtung des Abgases vor dem Steuerventil 10 und nach dem Steuerventil 10 Verbindungsöffnungen 24 auf. Die Verbindungsöffnungen 24 erstrecken sich radial durch die Außenwandung des ersten Auspuffrohrs 20.

Die Verbindungsöffnungen 24 verbinden den ersten Strömungskanal 21 mit einem zweiten Strömungskanal 31, der durch das zweite Auspuffrohr 30 gebildet ist. Konkret ist vorgesehen, dass durch die koaxiale Anordnung des ersten Auspuffrohrs 20 innerhalb des zweiten Auspuffrohrs 30 ein Ringraum 32 geschaffen ist, der einerseits durch das zweite Auspuffrohr 30 und andererseits durch das erste Auspuffrohr 20 begrenzt ist. Die Verbindungsöffnungen 24 im ersten Auspuffrohr 20 verbinden somit den ersten Strömungskanal 21 mit dem Ringraum 32, der den zweiten Strömungskanal 31 des zweiten Auspuffrohrs 30 bildet.

Das zweite Auspuffrohr 30 ist insgesamt einteilig ausgebildet und weist an einem längsaxialen Ende, das zum Steuerventil 10 zugewandt ist, ein Anschlussstück 34 auf. Das Anschlussstück 34 umfasst einen Querschnittsdurchmesser, der größer als der Querschnittsdurchmesser eines perforierten Mittelabschnitts 36 des zweiten Auspuffrohrs 30 ist. Das Anschlussstück 34 ist insbesondere so dimensioniert, dass es einen kegelstumpfförmigen Abschnitt 15 des Streuventils 10 bzw. des Ventilgehäuses 11 umgreift und bündig damit abschließt. An einem längsaxial gegenüberliegenden Ende des zweiten Auspuffrohrs 30 ist ein Endrohr 35 vorgesehen, das sich unmittelbar an den perforierten Mittelabschnitt 36 anschließt und einen Querschnittsdurchmesser aufweist, der kleiner als der Querschnittsdurchmesser des perforierten Mittelabschnitts 36 ist.

In Fig. 5 ist das Steuerventil im eingebauten Zustand in einer Auspuffanlage gezeigt, wobei in der Querschnittsdarstellung gemäß Fig. 5 insbesondere der Strömungsweg der Abgase dargestellt ist. Gut erkennbar ist das Ventilgehäuse 11, das den Absperrkörper 12 umschließt. Der Absperrkörper 12 ist als durchbohrte Kugel 12a ausgebildet, wobei der Absperrkörper 12 in der Darstellung gemäß Fig. 5 die vollständig geschlossene Stellung einnimmt. Die Durchgangsbohrung 13 ist aus dem ersten Strömungskanal 21 heraus gedreht, so dass keine Abgase oder nur ein kleiner Teil des Abgasstroms durch die Durchgangsbohrung 13 geleitet werden. Das Steuerventil 10 ist zwischen zwei Rohrabschnitten angeordnet, wobei jeder Rohrabschnitt durch ein erstes Auspuffrohr 20 und ein das erste Auspuffrohr 20 koaxial umgreifendes zweites Auspuffrohr 30 gebildet ist. Zwischen dem ersten Auspuffrohr 20 und dem zweiten Auspuffrohr 30 ist ein Ringraum 32 ausgebildet, der mit den Bypasskanälen 18 im Ventilgehäuse 11 fluidverbunden ist. Mit anderen Worten verbinden die Bypasskanäle 18 des Ventilgehäuses 11 die Ringräume 32 des zweiten Auspuffrohrs 30 auf beiden Seiten des Steuerventils 10. Die Bypasskanäle 18 bilden somit mit dem zweiten Auspuffrohr 30 bzw. dem Ringraum 32 einen zweiten Strömungskanal 31.

Im ersten Auspuffrohr 20 sind radiale Verbindungsöffnungen 24 vorgesehen, sodass das Abgas im geschlossenen Zustand des Absperrkörpers 12 über die Verbindungsöffnungen 24 in den Ringraum 32 eingeleitet wird. Durch die Bypasskanäle 18 kann das Abgas durch das Ventilgehäuse 11 hindurchtreten und anschließend über Verbindungsöffnungen 24, die zwischen dem ersten Auspuffrohr 20 und dem zweiten Auspuffrohr 30 in einem dem Steuerventil 10 in Strömungsrichtung nachgeordneten Rohrabschnitt angeordnet sind, in den ersten Strömungskanal 21 zurückgelangen. Der Strömungsverlauf des Abgases ist in Fig. 5 durch entsprechende Pfeile dargestellt.

Im Allgemeinen ist vorgesehen, dass das Steuerventil 10 so angeordnet ist, dass es einen Strömungsweg für Abgase in einer Auspuffanlage teilweise oder ganz absperren kann. Es ist auch möglich, das Steuerventil nicht nur für Strömungswege von Abgasen einzusetzen, sondern auch in Strömungswegen für Brennstoffe, Betriebsstoffe, Ansaugluft, Klimatisierungsluft oder Kühlmittel zu verwenden. Dabei kann das Steuerventil 10 nicht nur als Sperr- bzw. Drosselventil eingesetzt werden. Es ist auch möglich, mittels des Steuerventils 10 einen Fluidstrom aus einem Zuströmkanal 22 auf ein oder mehrere Abströmkanäle 23 aufzuteilen. Bei dem Ausführungsbeispiel gemäß Fig. 5 ist erkennbar, dass lediglich ein einziger Zuströmkanal durch das erste Auspuffrohr 20 gebildet ist. Durch Öffnung des Absperrkörpers 12, also durch Drehung des Absperrkörpers 12, wird das Abgas in den einzigen Abströmkanal 22 des ersten Auspuffrohrs 20 geleitet. Alternativ ist es möglich, mehrere Abströmkanäle 23 im Anschluss an das Steuerventil 10 vorzusehen, sodass durch die Drehung des Absperrkörpers 12 eine Verteilung des Abgases auf mehrere Abströmkanäle 23 ermöglicht wird.

Bei dem dargestellten Ausführungsbeispiel ist vorgesehen, dass der Strömungskanal 21, 31 jeweils rohrförmig mit einer im Wesentlichen kreiszylinderförmigen Innenkontur, ausgebildet ist. Es ist jedoch auch möglich, dass der Strömungskanal eine andere Querschnittsgeometrie, beispielsweise eine mehreckige oder polygene Querschnittsgeometrie aufweist.

Die Steuerung des Steuerventils 10 bzw. die Drehung des Absperrkörpers 12 kann mechanisch bzw. manuell erfolgen. Es ist aber auch möglich, die Stellung des Absperrkörpers 12 durch eine elektronisch gesteuerte Regeleinrichtung einzustellen. Die elektronisch gesteuerte Regeleinrichtung kann unterschiedliche Betriebszustandsdaten des Motorfahrzeugs, beispielsweise Fahrgeschwindigkeit, Motordrehzahl und/oder eingelegte Getriebegänge als Betriebszustandsdaten für die Berechnung des optimalen Öffnungsgrads des Steuerventils 10 zugrunde legen. Das Steuerventil 10 kann so dynamisch gesteuert werden. Vorzugsweise werden die vorgenannten Betriebszustandsdaten von einer zentralen Schnittstelle am Fahrzeug abgegriffen. Derartige Schnittstellen sind beispielsweise Diagnosestecker, standardisierte Datenübertragungsschnittstellen und/oder OBD-Stecker. Durch Verwendung einer solchen standardisierten Datenschnittstelle wird es ermöglicht, das Steuerventil 10 leicht in bestehende Fahrzeuge nachzurüsten.

Sollten keine Daten zur Identifizierung der eingelegten Getriebegänge des Motorfahrzeugs verfügbar sein, so kann die Regelung des Steuerventils 10 auch anhand von Daten erfolgen, die die Fahrgeschwindigkeit und die Motordrehzahl ermitteln. Diese Daten lassen Rückschlüsse auf den eingelenkten Getriebegang zu und ermöglichen so ebenfalls die dynamische Steuerung des Steuerventils 10.

### Bezugszeichenliste

- 10: Steuerventil
- 11: Ventilgehäuse
- 12: Absperrkörper
- 12a: durchbohrte Kugel
- 12b: Dichtung
- 13: Durchgangsbohrung
- 14: zylinderförmiger Abschnitt
- 15: kegelstumpfförmiger Abschnitt
- 16: Betätigungswelle
- 17: Öffnung
- 18: Bypasskanal
- 19: Lagerstift
- 20: erstes Auspuffrohr
- 21: erster Strömungskanal
- 22: Zuströmkanal
- 23: Abströmkanal
- 24: Verbindungsöffnung
- 25: Lagerbuchse
- 26: Seilführung
- 27: Drahtseil
- 28: Feder
- 29: Schlaufe
- 30: zweites Auspuffrohr
- 31: zweiter Strömungskanal
- 32: Ringraum
- 33: Schalldämpfer
- 34: Anschlussstück
- 35: Endrohr
- 36: perforierter Mittelabschnitt
- 37: Haken

## Patentansprüche

1. Auspuffanlage für ein Motorfahrzeug, insbesondere ein Motorrad, mit einem ersten Auspuffrohr (20), das einen ersten Strömungskanal (21) bereitstellt, und mit einem Steuerventil (10), das ein Ventilgehäuse (11) aufweist, in dem ein Absperrkörper (12) zur Querschnittsänderung eines Strömungskanals (21) der Auspuffanlage beweglich angeordnet ist, wobei zwischen dem Absperrkörper (12) und dem Ventilgehäuse (11) ein Ausdehnungsspiel in radialer und axialer Richtung vorgesehen ist, welches eine thermische Ausdehnung des Absperrkörpers (12) innerhalb des Ventilgehäuses (11) erlaubt, und wobei das Ventilgehäuse (11) wenigstens einen Bypasskanal (18) aufweist, **dadurch gekennzeichnet, dass** der Absperrkörper eine durchbohrte Kugel aufweist und im ersten Strömungskanal angeordnet ist.

2. Auspuffanlage (10) nach Anspruch 1,
**dadurch gekennzeichnet, dass**
der Absperrkörper (12), insbesondere die durchbohrte Kugel (12a), ein oder mehrere Durchgangsbohrungen (13) aufweist.

3. Auspuffanlage (10) nach Anspruch 1 oder 2,
**dadurch gekennzeichnet, dass**
das Ventilgehäuse (11) mehrteilig ausgebildet ist.

4. Auspuffanlage (10) nach einem der vorhergehenden Ansprüche,
**dadurch gekennzeichnet, dass**
das Ventilgehäuse (11) und/oder der Absperrkörper (12) ein Vollmaterial aufweist oder daraus gebildet ist.

5. Auspuffanlage (10) nach einem der Ansprüche 1 bis 3,
**dadurch gekennzeichnet, dass**
das Ventilgehäuse (11) und/oder der Absperrkörper (12) ein Hohlmaterial aufweist oder daraus gebildet ist.

6. Auspuffanlage (10) nach einem der vorhergehenden Ansprüche,
**dadurch gekennzeichnet, dass**
das Ventilgehäuse (11) einen mittleren, zylinderfömigen Abschnitt (14) und zwei sich daran anschließende, kegelstumpfförmige Abschnitte (15) aufweist.

7. Auspuffanlage (10) nach einem der vorhergehenden Ansprüche,
**dadurch gekennzeichnet, dass**
der Absperrkörper (12) mit einer Betätigungswelle (16) verbunden oder damit einteilig ausgebildet ist, die sich durch eine Öffnung (17) im Ventilgehäuse (11) nach außen erstreckt.

8. Auspuffanlage (10) nach Anspruch 6 und 7,
**dadurch gekennzeichnet, dass**
die Öffnung (17) im zylinderförmigen Abschnitt (14) des Ventilgehäuses (11) angeordnet ist.

9. Auspuffanlage (10) nach Anspruch 7 oder 8,
**dadurch gekennzeichnet, dass**
die Betätigungswelle (16) und der Absperrkörper (12) voneinander verschiedene Materialien aufweisen.

10. Auspuffanlage (10) nach einem der vorhergehenden Ansprüche,
**dadurch gekennzeichnet, dass**
zwischen dem Ventilgehäuse (11) und dem Absperrkörper (12) wenigstens eine Dichtung, insbesondere ein metallische Dichtung, angeordnet ist.

11. Auspuffanlage (10) nach einem der vorhergehenden Ansprüche,
**dadurch gekennzeichnet, dass**
der Absperrkörper (12) schwimmend, insbesondere allseitig beabstandet zum Ventilgehäuse (11), im Ventilgehäuse (11) angeordnet ist.

12. Auspuffanlage (10) nach einem der vorhergehenden Ansprüche,
**dadurch gekennzeichnet, dass**
das Ventilgehäuse (11) wenigstens ein Lager für den Absperrkörper (12) und/oder die Betätigungswelle (16) aufweist.

13. Auspuffanlage (10) nach einem der vorhergehenden Ansprüche,
**dadurch gekennzeichnet, dass**
ein Anschlag zur Begrenzung einer Drehbewegung des Absperrkörpers (12) vorgesehen ist.

14. Auspuffanlage (10) nach einem der vorhergehenden Ansprüche,
**dadurch gekennzeichnet, dass**
wenigstens ein Federelement vorgesehen ist, das auf eine Drehbewegung des Absperrkörpers (12) einwirkt, so dass der Absperrkörper (12) in eine vorbestimmte Ausgangsstellung zurückführbar ist.

15. Auspuffanlage nach einem der vorhergehenden Ansprüche,
**dadurch gekennzeichnet, dass**
das Steuerventil (10) einen Zuströmkanal (22) mit wenigstens zwei Abströmkanälen (23) verbindet, so dass eine Aufteilung des Volumenstroms aus dem Zuführkanal (22) in die Abströmkanäle (23) einstellbar ist.

16. Auspuffanlage nach einem der vorhergehenden Ansprüche,
**dadurch gekennzeichnet, dass**
wenigstens ein zweites Auspuffrohr (30) vorgesehen ist, das das erste Auspuffrohr (20) umgreift, so dass zwischen dem ersten Auspuffrohr (20) und dem zweiten Auspuffrohr (30) ein Ringraum (32) gebildet ist, wobei das Steuerventil (10) derart angeordnet ist, dass wenigstens ein Bypasskanal (18) des Ventilgehäuses (11) im Ringraum (32) positioniert ist.

17. Auspuffanlage nach Anspruch 16, **dadurch gekennzeichnet, dass**
das erste Aufpuffrohr (20) jeweils in Strömungsrichtung des Abgases vor und hinter dem Steuerventil (10) eine Verbindungsöffnung (24) aufweist, die den ersten Strömungskanal (21) des ersten Auspuffrohrs (20) mit dem Ringraum (32) verbindet.

18. Auspuffanlage nach einem der vorhergehenden Ansprüche ,
**dadurch gekennzeichnet, dass**
das Steuerventil (10) elektronisch steuerbar ist.

19. Auspuffanlage nach einem der vorhergehenden Ansprüche,
**dadurch gekennzeichnet, dass**
das Steuerventil (10) mit einer Steuerung verbunden ist, die eine Stellung des Absperrkörpers (12) in Abhängigkeit von Betriebszustandsdaten des Motorfahrzeugs vorgibt.

20. Auspuffanlage nach Anspruch 19,
**dadurch gekennzeichnet, dass**
die Steuerung eine standardisierte Schnittstelle, insbesondere OBD-Schnittstelle, zur Verbindung mit dem Motorfahrzeug aufweist.

21. Auspuffanlage nach Anspruch 20,
**dadurch gekennzeichnet, dass**
das Steuerventil (10) durch einem Stellmotor betätigbar ist, wobei die Stromversorgung des Stellmotors über die standardisierte Schnittstelle, insbesondere die OBD-Schnittstelle, erfolgt.

## Claims

1. Exhaust system for a motor vehicle, in particular a motorcycle, with a first exhaust pipe (20) which provides a first flow channel (21) and with a control valve (10), which comprises a valve housing (11) in which a closure body (12) is moveably arranged for changing the cross-section of a flow channel (21) of the exhaust system, wherein between the closure body (12) and the valve housing (11) an expansion clearance in the radial and axial direction is provided, which allows thermal expansion of the closure body (12) within the valve housing (11) and wherein the valve housing (11) comprises at least one by-pass channel (18), **characterised in that** the closure body comprises a drilled-through sphere and is arranged in the first flow channel.

2. Exhaust system (10) according to claim 1
**characterised in that**
the closure body (12), in particular the drilled-through sphere (12a), has one or more through holes (13).

3. Exhaust system (10) according to claim 1 or 2
**characterised in that**
the valve housing (11) is made of several parts.

4. Exhaust system (10) according to any one of the preceding claims
**characterised in that**
the valve housing (11) and/or the closure body (12) comprises, or is made of, a solid material.

5. Exhaust system (10) according to any one of claims 1 to 3
**characterised in that**
the valve housing (11) and/or the closure body (12) comprises, or is made of, a hollow material.

6. Exhaust system (10) according to any one of the preceding claims
**characterised in that**
the valve housing (11) comprises a middle, cylindrical section (14), and, adjoining this, two conical sections (15).

7. Exhaust system (10) according to any one of the preceding claims
**characterised in that**
the closure body (12) is connected to, or formed in one piece with, an actuating shaft (16) which extends outwards through an opening (17) in the valve housing (11).

8. Exhaust system (10) according to claim 6 or 7
**characterised in that**
the opening (17) is arranged in the cylindrical section (14) of the valve housing (11).

9. Exhaust system (10) according to claim 7 or 8
**characterised in that**
the actuating shaft (16) and the closure body (12) are made of different materials.

10. Exhaust system (10) according to any one of the preceding claims
**characterised in that**
between the valve housing (11) and the closure body (12) at least one seal, in particular a metallic seal, is arranged.

11. Exhaust system (10) according to any one of the preceding claims
**characterised in that** the
closure body (12) is arranged in floating manner in the valve housing (11), more particularly at distance on all sides from the valve housing (11).

12. Exhaust system (10) according to any one of the preceding claims
**characterised in that**
the valve housing (11) comprises at least one bearing for the closure body (12) and/or the actuating shaft (16).

13. Exhaust system (10) according to any one of the preceding claims
**characterised in that**
a stop is provided in order to limit a rotational movement of the closure body (12).

14. Exhaust system (10) according to any one of the preceding claims
**characterised in that**
at least one spring element is provided which acts on a rotational movement of the closure body (12) so that the closure body (12) can be returned into a predetermined initial position.

15. Exhaust system (10) according to any one of the preceding claims
**characterised in that**
the control valve (1) connects an inflow channel (22) with at least two outflow channels (23) so that a division of the volumetric flow from the inflow channel (22) into the outflow channels (23) can be adjusted.

16. Exhaust system (10) according to any one of the preceding claims
**characterised in that**
at least one second exhaust pipe (30) is provided which encompasses the first exhaust pipe (20) so that between the first exhaust pipe (20) and the second exhaust pipe (30) an annular space (32) is formed, wherein the control valve (10) is arranged in such a way that at least one by-pass channel (18) of the control valve (11) is positioned in the annular space (32).

17. Exhaust system according to claim 16
**characterised in that**
in the direction of flow of the exhaust gas, both before and after the control valve (10) the first exhaust pipe (20) has a connection opening (24) which connects the first flow channel (21) of the first exhaust pipe (20) to the annular space (32).

18. Exhaust system according to any one of the preceding claims
**characterised in that**
the control value (10) is electronically controlled.

19. Exhaust system according to any one of the preceding claims
**characterised in that**
the control valve (10) is connected to a controller which defines a position of the closure body (12) as a function of the operating status data of the motor vehicle.

20. Exhaust system according to any one of the preceding claims
**characterised in that**
the controller comprises a standardised interface, in particular an OBD interface, for connection to the motor vehicle.

21. Exhaust system according to claim 20
**characterised in that** the
control valve (10) can be operated by a servo-motor, wherein power is supplied to the servo-motor via the standardised interface, in particular the OBD interface.

## Revendications

1. Installation d'échappement pour un véhicule à moteur, notamment une motocyclette, avec un premier tuyau d'échappement (20), qui fournit un premier conduit d'écoulement (21), et avec une soupape de commande (10), qui comporte un boîtier de soupape (11), dans lequel est disposé de façon mobile un corps d'obturation (12) pour modification de section d'un conduit d'écoulement (21) de l'installation d'échappement, un jeu d'expansion étant prévu dans la direction radiale et axiale entre le corps d'obturation (12) et le boîtier de soupape (11), lequel permet une dilatation thermique du corps d'obturation (12) à l'intérieur du boîtier de soupape (11) et le boîtier de soupape (11) comportant au moins un conduit de dérivation (18), **caractérisée en ce que** le corps d'obturation comporte une sphère percée et est disposé dans un premier conduit d'écoulement.

2. Installation d'échappement (10) selon la revendication 1, **caractérisée en ce que** le corps d'obturation (12), notamment la sphère percée (12a), comporte un ou plusieurs trous de passage (13).

3. Installation d'échappement (10) selon la revendication 1 ou 2, **caractérisée en ce que** le boîtier de soupape (11) est constitué en plusieurs parties.

4. Installation d'échappement (10) selon l'une quelconque des revendications précédentes, **caractérisée en ce que** le boîtier de soupape (11) et/ou le corps d'obturation (12) comporte un matériau plein ou est formé de celui-ci.

5. Installation d'échappement (10) selon l'une quelconque des revendications 1 à 3, **caractérisée en ce que** le boîtier de soupape (11) et/ou le corps d'obturation (12) comporte un matériau creux ou est formé de celui-ci.

6. Installation d'échappement (10) selon l'une quelconque des revendications précédentes, **caractérisée en ce que** le boîtier de soupape (11) comporte une section centrale, de forme cylindrique (14) et deux sections tronconiques (15) s'y raccordant.

7. Installation d'échappement (10) selon l'une quelconque des revendications précédentes, **caractérisée en ce que** le corps d'obturation (12) est relié à un arbre d'actionnement (16) ou est constitué avec en une seule pièce, qui s'étend vers l'extérieur à travers une ouverture (17) dans le boîtier de soupape (11).

8. Installation d'échappement (10) selon la revendication 6 ou 7, **caractérisée en ce que** l'ouverture (17) est disposée dans la section de forme cylindrique (14) du boîtier de soupape (11).

9. Installation d'échappement (10) selon la revendication 7 ou 8, **caractérisée en ce que** l'arbre d'actionnement (16) et le corps d'obturation (12) comportent des matériaux différents l'un de l'autre.

10. Installation d'échappement (10) selon l'une quelconque des revendications précédentes, **caractérisée en ce qu'**au moins un joint d'étanchéité, notamment un joint d'étanchéité métallique, est disposé entre le boîtier de soupape (11) et le corps d'obturation (12).

11. Installation d'échappement (10) selon l'une quelconque des revendications précédentes, **caractérisée en ce que** le corps d'obturation (12) est disposé dans le boîtier de soupape (11), de façon flottante, notamment à distance de tous les côtés du boîtier de soupape (11).

12. Installation d'échappement (10) selon l'une quelconque des revendications précédentes, **caractérisée en ce que** le boîtier de soupape (11) comporte au moins un palier pour le corps d'obturation (12) et/ou l'arbre d'actionnement (16).

13. Installation d'échappement (10) selon l'une quelconque des revendications précédentes, **caractérisée en ce qu'**une butée est prévue pour limiter un mouvement de rotation du corps d'obturation (12).

14. Installation d'échappement (10) selon l'une quelconque des revendications précédentes, **caractérisée en ce qu'**au moins un élément à ressort est prévu, qui agit sur un mouvement de rotation du corps d'obturation (12), de telle sorte que le corps d'obturation (12) peut être reculé dans une position initiale prédéfinie.

15. Installation d'échappement (10) selon l'une quelconque des revendications précédentes, **caractérisée en ce que** la soupape de commande (10) relie un conduit d'alimentation (22) à au moins deux conduits d'échappement (23) de telle sorte qu'une répartition du débit volumétrique peut être réglée depuis le conduit d'alimentation (22) dans les conduits d'échappement (23).

16. Installation d'échappement (10) selon l'une quelconque des revendications précédentes, **caractérisée en ce qu'**au moins un deuxième tuyau d'échappement (30) est prévu, qui enveloppe le premier tuyau d'échappement (20) de telle sorte qu'un espace annulaire (32) est formé entre le premier tuyau d'échappement (20) et le deuxième tuyau d'échappement (30), la soupape de commande (10) étant disposée de telle manière qu'au moins un conduit de dérivation (18) du boîtier de soupape (11) est positionné dans l'espace annuaire (32).

17. Installation d'échappement (10) selon la revendication 16, **caractérisée en ce que** le premier tuyau d'échappement (20) comporte respectivement en direction d'écoulement des gaz d'échappement une ouverture de liaison (24) devant et derrière la soupape de commande (10), qui relie le premier conduit d'écoulement (21) du premier tuyau d'échappement (20) à l'espace annulaire (32).

18. Installation d'échappement (10) selon l'une quelconque des revendications précédentes, **caractérisée en ce que** la soupape de commande (10) peut être commandée électroniquement.

19. Installation d'échappement (10) selon l'une quelconque des revendications précédentes, **caractérisée en ce que** la soupape de commande (10) est reliée à une commande, qui prédéfinit une position du corps d'obturation (12) en fonction des données d'état de fonctionnement du véhicule à moteur.

20. Installation d'échappement (10) selon la revendication 19, **caractérisée en ce que** la soupape de commande comporte une interface normalisée, notamment une interface OBD, pour liaison avec le véhicule à moteur.

21. Installation d'échappement (10) selon la revendication 20, **caractérisée en ce que** la soupape de commande (10) peut être actionnée par un servomoteur, l'alimentation en courant du servomoteur ayant lieu par le biais de l'interface normalisée, notamment l'interface OBD.
